# EUROPEAN PATENT SPECIFICATION

(11) **EP 1 757 132 B1**
(45) Date of publication and mention of the grant of the patent: **17.07.2013**
(21) Application number: 05749503.8
(22) Date of filing: 18.05.2005
(51) Int. Cl.: H04W 88/02

(54) **MODULAR DATA COMPONENTS FOR WIRELESS COMMUNICATION DEVICES**
MODULARE DATENKOMPONENTEN FÜR DRAHTLOSE KOMMUNIKATIONSEINRICHTUNGEN
COMPOSANTS DE DONNEES MODULAIRES POUR DES DISPOSITIFS DE COMMUNICATION SANS FIL

(30) Priority: 18.05.2004 US 848939; 18.05.2004 US 848940; 18.05.2004 US 848941
(43) Date of publication of application: 28.02.2007
(73) Proprietor: Kyocera Corporation, Kyoto 612-8501 (JP)
(72) Inventor: DATE, Umesh M., Benniganhalli Ext (IN); PATEL, Mehul B., Bilekahalli (IN); RAJARAM, Gowri, S., Oceanside, CA 92056 (US)
(74) Representative: Viering, Jentschura & Partner
(86) International application number: PCT/US2005/017451
(87) International publication number: WO 2005/115036

(56) References cited:
- WO-A-00/67112
- US-A1- 2002 142 762
- US-B1- 6 714 992

## Description

### FIELD OF THE INVENTION

The present invention generally relates to the field of wireless communications and more particularly relates to interchangeable software applications, hardware drivers, communication interfaces and components of the operating system in a wireless communication device.

### BACKGROUND OF THE INVENTION

Document WO 00/67112 discloses a system and method for managing distribution of content to a device. Document US 6,714,992 discloses a method and system for embedded network device installation. Conventionl wireless communication devices typically become isolated computing platforms once they are deployed (i.e., sold to a consumer). Consumers typically must bring the wireless communication device (also referred to herein as "wireless device," "handset," and "mobile device") to a service station for upgrades to the operating system or any integral software application such as a phonebook.

Additionally, if the consumer wants to replace a hardware component of a wireless communication device, the wireless device must be brought into a service station. Generally, hardware replacements are prohibitively expensive if the wireless device is not broken and under warranty. Even so, when a wireless device under warranty has a hardware component replaced, the new component is merely a working version of the component being replaced. Thus, when a consumer purchases a wireless communication device, the consumer is locked into the physical configuration of the wireless device for the life of the wireless communication device.

An additional drawback of conventional wireless communication devices is that new external devices, such as a digital cameras, are limited to the specific, proprietary device that is offered by the manufacturer of the handset. Thus, a consumer's choice of external devices that enhance a wireless communication device is severely limited. Therefore, what is needed is a system and method that overcomes these significant problems found in the conventional systems as described above.

### SUMMARY OF THE INVENTION

Conventional wireless communication devices are isolated computing platforms. Once a wireless communication device has been deployed, updates to the software on the device require that the handset be brought into a service station where the software suit can be upgraded and the handset reconfigured. This is particularly true where updates to the operating system are involved or integral applications such as the address book. Additionally, the software suite on a deployed handset is static and inflexible and does not allow a user to customize the various applications to suit his or her needs.

For a user of a wireless communication device to take advantage of advances in technology embodied in the physical device, a new device must be purchased. If a new model with an improved display is released by the manufacturer, the user has no way to upgrade the handset. Additionally, if a hardware component malfunctions or breaks. The entire handset requires replacement, or in some instances the handset can be sent back to the manufacturer where it is refurbished. Unfortunately, this refurbishing doesn't allow for upgraded, newer components to be used. The manufacturer must replace the component with a working version of the same component.

The invention provides a method for dynamically installing a data component on a deployed wireless communication device according to claim 1. The invention further provides a wireless communication device according to claim 11. Further embodiments of the invention are described in the dependent claims. A first aspect provides systems and methods for dynamic installation of modular software applications and operating system components. When a handset is instructed to install a new software module, the handset sends a request to an update module server identifying the new application or software module to be installed. The update module server responds with an instruction set for installing the software module and the software module itself. Upon receipt, the handset installs the software module, making any necessary deletions to applications or modules in persistent storage on the handset. Finally, the handset can be reconfigured or rebooted to complete the installation and configuration.

A second aspect provides systems and methods for interchangeable modular hardware components on a wireless communication device. When a handset component is obsolete or a new and improved component is available, the new component can be swapped with the old component. When the handset is powered up after having a hardware component replaced, the handset recognizes that a new component is present. Upon recognizing the new component, the handset queries the component to obtain information about the components characteristics. Once this information has been obtained, the handset queries the update server over a wireless communication network for an optimized device driver that will allow the handset to utilize the improved functionality of the new component. Additionally, the handset may query the update server for new software applications that also exploit the improved functionality of the new component. The update server responds with an instruction set for installing the device driver and the device driver itself. Upon receipt, the handset installs the device driver and reconfigures or reboots to complete the installation and configuration.

Another aspect provides for dynamically updating a communication interface on the wireless device to facilitate communication with the external device. Upon detecting a connection from an external device, either by a direct physical link, direct wireless link, or remote wireless link, the wireless communication device obtains summary information about the external device. If a communication interface for the external device is not already present in the wireless communication device, the wireless device sends a portion of the external device's summary information to a remote interface server and requests the appropriate interface. Upon receipt of the interface, the wireless communication device installs the interface and then proceeds to establish communication with the external device.

### BRIEF DESCRIPTION OF THE DRAWINGS

The details of the present invention, both as to its structure and operation, may be gleaned in part by study of the accompanying drawings described below, in which like reference numerals refer to like parts.

Figure 1 is a high level block diagram illustrating an example wireless communication network.

Figure 2 is a block diagram illustrating an example representation of data in persistent storage on a wireless communication device.

Figure 3A is a block diagram illustrating components of a data storage area for a modular software interface component.

Figure 3B is a block diagram illustrating components of a data storage area for a modular hardware detector component.

Figure 3C is a block diagram illustrating components of a data storage area for a modular external device detector component.

Figure 3D is a block diagram illustrating an example operation code library and corresponding runtime instruction set.

Figure 3E is a block diagram illustrating an example set of runtime instructions.

Figure 4 is a flow diagram illustrating an example process for a user initiated software module download.

Figure 5 is a flow diagram illustrating an example process for activating a resident software module on a wireless communication device.

Figure 6 is a flow diagram illustrating an example process for a network initiated software module download.

Figure 7 is flow diagram illustrating an example process for installing a software module on a wireless communication device.

Figure 8 is flow diagram illustrating an example process for expiring a software module on a wireless communication device.

Figure 9 is flow diagram illustrating an example process for paying for using a software module on a wireless communication device.

Figure 10 is a block diagram illustrating an exemplary wireless communication device that may be used in connection with the various embodiments described herein.

Figure 11 is a block diagram illustrating an exemplary computer system as may be used in connection with various embodiments described herein.

Figure 12 is a block diagram illustrating an example wireless communication device and modular hardware components.

Figure 13 is a flow diagram illustrating an example process for obtaining summary information from a new hardware component on a wireless communication device.

Figure 14 is a flow diagram illustrating an example process for requesting a device driver for a new hardware component from a remote server.

Figure 15 is a flow diagram illustrating an example process for installing a device driver for a new hardware component on a wireless communication device.

Figure 16 is a flow diagram illustrating an example process for configuring a new hardware component on a wireless communication device.

Figure 17A is a block diagram illustrating an example direct physical connection between a wireless communication device and an external device.

Figure 17B is a block diagram illustrating an example direct wireless connection between a wireless communication device and an external device.

Figure 17C is a block diagram illustrating an example remote wireless connection between a wireless communication device and an external device.

Figure 18 is a flow diagram illustrating an example process for obtaining summary information from an external device.

Figure 19 is a flow diagram illustrating an example process for requesting interface software from a remote server.

Figure 20 is a flow diagram illustrating an example process for installing interface software.

Figure 21 is flow diagram illustrating an example process for initializing an external device.

### DETAILED DESCRIPTION

Disclosed herein are systems and methods for dynamically updating software modules and software applications and for updating device drivers on a wireless communication device via an over-the-air link. For example, methods and systems as disclosed herein allows for a wireless communication device to request a new software or driver module from an update server and receive that new module in an wireless communication data package. Upon receipt of the data package, the wireless device installs the requested module and if necessary, deletes other modules to make space for the new module in persistent storage. If necessary, the wireless device also reconfigures the wireless device for use of the new module and may also initiate a reboot of the device.

Another embodiment as disclosed herein provide for a wireless communication device and method for dynamically recognizing and interfacing with an external device For example, one method as disclosed herein allows for a wireless communication device to recognize the presence of an external device via a wired or wireless communication link. Upon recognition, the wireless communication device queries the external device to obtain summary profile information about the device. The wireless communication device then queries a server over a wireless communication network and receives a response comprising an interface to facilitate communication between the devices.

After reading this description it will become apparent to one skilled in the art how to implement the invention in various alternative embodiments and alternative applications. However, although various embodiments of the present invention will be described herein, it is understood that these embodiments are presented by way of example only, and are not limitations. As such, this detailed description of various alternative embodiments should not be construed to limit the scope or breadth of the present invention as set forth in the appended claims.

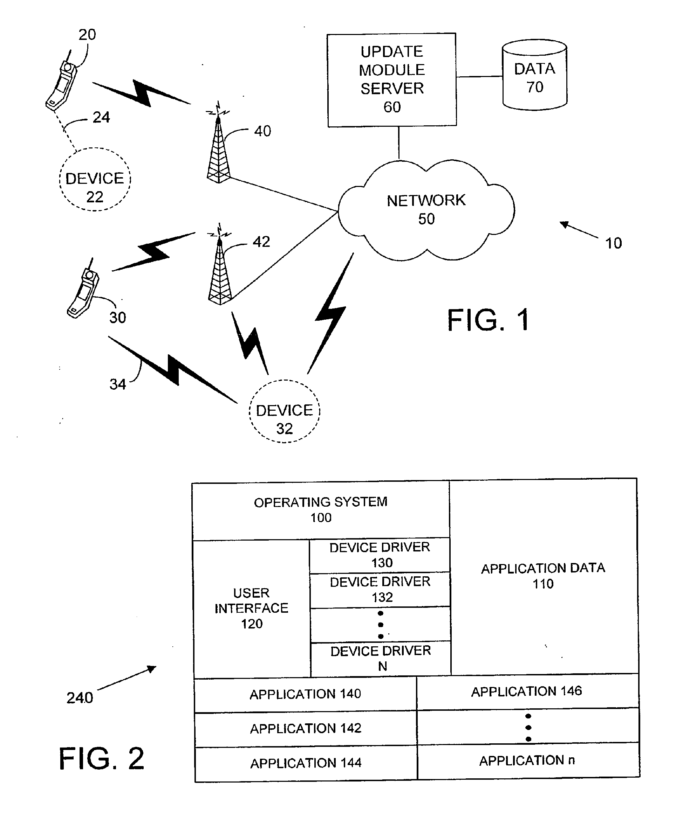

Figure 1 is a high level block diagram illustrating an example wireless communication network 10. In the illustrated embodiment, the wireless communication network 10 comprises a plurality of wireless communication devices 20 and 30 communicatively coupled with a network 50 via a plurality of base stations 40 and 42. Additional wireless communication devices and base stations can also be employed as part of the wireless communication network 10. The wireless communication network 10 also comprises a update module server 60, which is coupled with a data storage area 70. The wireless communication devices 20 and 30 are communicatively coupled with the update module server 60 via the base stations 40 and 42 and the network 50.

Wireless communication device 20 can be any sort of device with the ability to communicate within the wireless communication network 10 and execute software modules and/or have modular hardware components replaced. Preferably, wireless communication device 20 also has a persistent storage area. For example, wireless communication device 20 may be a cell phone, a personal digital assistant ("PDA"), a laptop computer, wristwatch, or any other device configured for wireless communication. Wireless communication devices may also be referred to herein as "handsets" or "mobile phones" or "mobile devices."

In the illustrated embodiment, the connection between external device 22 and handset 20 is a direct physical connection 24. External devices can also be coupled with handsets via a wireless link such as a direct wireless link 34 or a remote wireless link 36 between external device 32 and handset 30. In one embodiment, the direct physical connection 24 can be a hardwired physical connection between the handset 20 and the external device 22, for example a serial cable or a wired network connection. Alternatively, the direct wireless connection 34 can employ local networking protocol or bluetooth or infrared. External device 32 may also be connected to handset 30 through a remote wireless connection 36 that links the devices via a base station such as base station 42. Additionally, external device 32 can also be connected to handset 30 through a remote wireless connection 36 that links the devices via a network such as the internet or network 50.

Base station 40 is configured to communicate over-the-air with a plurality of wireless communication devices and includes a transceiver (not shown) that converts the over-the-air communications to wired communications that travel over network 50. Preferably, network 50 is a private network operated by a wireless carrier which provides the infrastructure for handoffs between base stations such as base station 40 and 42. Additionally, network 50 preferably provides the communication link between various applications, services, and other computer based servers such as update module server 60.

Network 50 may also serve as the conduit for connections to other networks (not pictured) such as an Integrated Services Digital Network ("ISDN"), Public Switched Telephone Network ("PSTN"), Public Land Mobile Network ("PLMN"), Packet Switched Public Data Network ("PSPDN"), and the Internet, just to name a few.

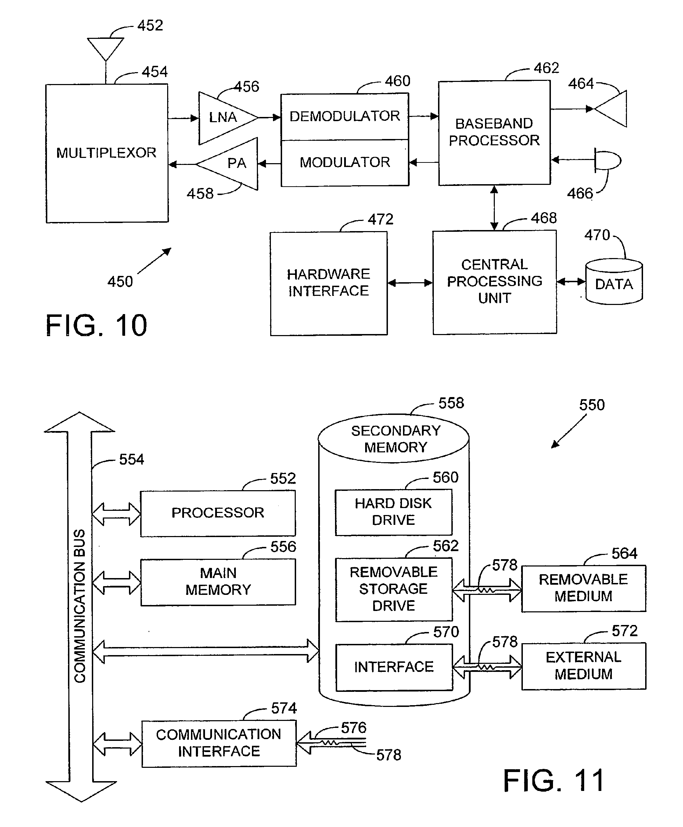

Update module server 60 can be implemented as a single computer or as a plurality of servers logically arranged to provide dynamic instruction sets and software and hardware modules to mobile devices and to execute dynamic instruction sets received from mobile devices. In the illustrated embodiment, update module server 60 is coupled with a data storage area 70 that preferably houses a plurality of executable interfaces and a set of server operation codes, handset operation codes and executable instructions corresponding to the server operation codes. The features of a general purpose computer that may implement the update module server 60 are later described with respect to Figure 11. One function of the update module server 60 is to receive requests from a handset 20, 30 and respond to those requests by providing the handset with an executable software module, or a device driver for exchanged handset hardware, or an executable interface for communication with an external device.

Figure 2 is a block diagram illustrating an example representation of data in persistent storage 240 on a wireless communication device 20. The general features of wireless communication device 20, 30 that allow it to function as such are later described with respect to Figure 10. In the illustrated embodiment, the operating system 100 is resident in persistent storage 240. The operating system 100 preferably comprises the fundamental executable program or programs that allow the device to function. In addition to the operating system 100, application data 110 and user interface 120 are in persistent storage 240. The application data 110 preferably comprises the user information and application information that an application needs to function or that an application uses to provide its service.

The user interface 120 may comprise both the executable user interface application and the user interface data that is used by the application. In an alternative embodiment, the user interface application portion may be included as part of the operating system and the user interface 120 may comprise ancillary user data or custom data or other data usable by the user interface application or the user. The persistent storage area 240 additionally comprises one or more device drivers such as device driver 130, device driver 132, all the way up to device driver n. These device drivers are preferably executable applications that facilitate communication between the handset and another device, or possibly between the core handset and an integral device such as the display, keypad, speaker, microphone, or earphones, just to name a few.

Additionally shown as part of the persistent storage 240 are a series of software applications or modules such as applications 140, 142, 144, 146, and on up to application n. As illustrated, a large number of applications may be resident as part of the persistent storage 240. The only limit on the number of applications that can be stored in persistent storage 240 is the physical limit of the storage 240.

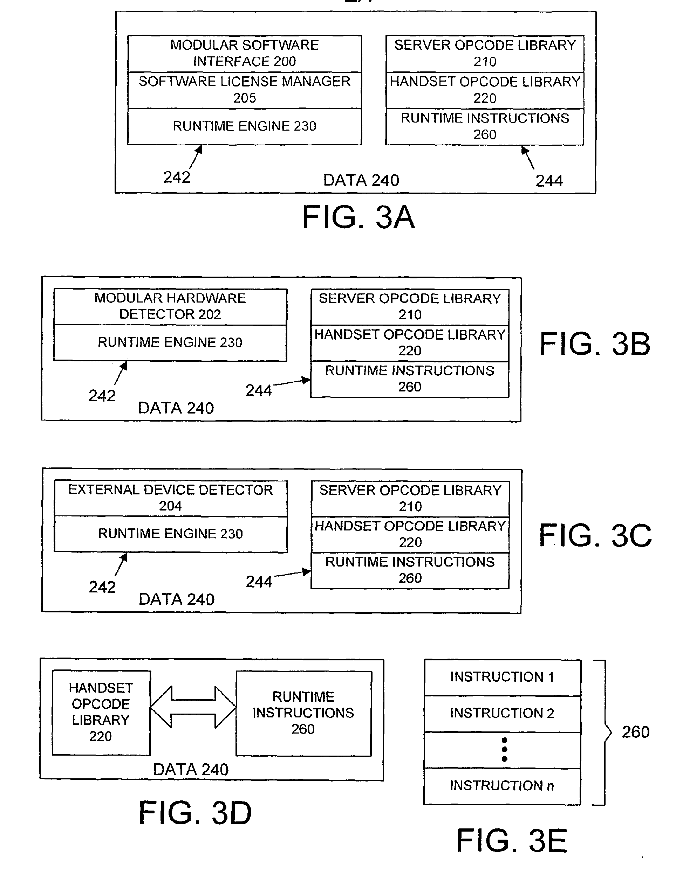

Figure 3a is a block diagram illustrating elements of data 240 of an example wireless communication device 20. In the illustrated embodiment, the data 240 has a number of applications 242 comprising a modular software interface 200, a sosftware license manager 205, and a runtime engine 230. Other data elements 244, which may be included in the application data 110 as illustrated in Figure 2, comprise a server operation code ("opcode") library 210, handset opcode library 220, and runtime instructions 260.

The modular software interface 200 is preferably configured to receive user requests to install new software modules and applications. Additionally, the modular software interface 200 is preferably configured to receive network initiated software module downloads and software application downloads. The modular software interface 200 may comprise a user interface module that is adaptable to accept commands from a user for user initiated downloads. Additionally, the modular software interface 200 may comprise a communication module adaptable to receive communications from a network server for network initiated downloads.

In one embodiment, the modular software interface 200 receives a command from a user to download a particular software module. The modular software interface 200 is preferably configured to communicate with the runtime engine 230 to create a request for the software module to be downloaded from a network server. In an alternative embodiment, the modular software interface 200 receives a command that originated from a network server. The modular software interface 200 is preferably configured to parse and interpret the command to determine what software module the network server is requesting that the handset download and install. Upon validation of the request from the network, the modular software interface 200 then proceeds to communicate with the runtime engine 230 to effect the download.

Additionally, the modular software interface 200 can be configured to determine the available space in persistent storage 240 where the software module is to be installed. For example, upon receiving a request to install a new software module, the modular software interface 200 determines the amount of disk space (or other persistent storage space) available on the handset. In one embodiment, to determine the available storage space, the modular software interface 200 may query the operating system 100 of the handset, as discussed above with reference to Figure 2. If enough space is available, then the modular software interface 200 can proceed to communicate with the runtime engine 230 as described above.

If there is not enough persistent storage space to install the requested software module, the modular software interface 200 queries the user or the network 50 (depending on where the request originated) to identify a software module or other data in persistent storage that can be deleted. Alternatively, the modular software interface 200 may determine what data can be deleted, for example, by querying the operating system or identifying older versions of the requested software module.

Additionally, the modular software interface 200 is preferably configured to instruct the operating system 100 to delete the identified software module or other data in persistent storage 240 in order to provide enough availability for the new software module. If no persistent storage space is available, and none can be obtained by deleting data or software modules already occupying space in persistent storage, then the modular software interface 200 can notify the user or network that space is not available to install the requested software module.

Continuing with Figure 3A, the handset opcode library 220 preferably includes the universe of operation codes that represent each function or executable code segment that the handset can be instructed to execute by the update module server 60, illustrated in Figure 1. Advantageously, handset opcode library 220 includes the operation codes that serve as place holders for the actual executable machine code functions or code segments. As such, the handset opcode library 220 preferably contains a list of all available operation codes that correspond to each and every function that can be executed by the handset 20, 30.

Similarly, the server opcode library 210 preferably includes the universe of operation codes that represent each server side function or executable code segment. Advantageously, server opcode library 210 may only include the operation codes for the actual executable machine code functions or code segments, which do not reside on the wireless communication device 20. As such, the server opcode library 220 contains a list of all the operation codes for each available server function that can be executed by the update module server 60 on behalf of the handset 20, 30. In the preferred embodiment, the number of available server functions can well exceed the number of available handset functions because the update module server 60 does not suffer from the minimal resources typically found on mobile devices such as, for example, cell phones and PDAs.

Runtime engine 230 is preferably configured to process dynamic instructions sets. One example of a dynamic instruction set is a set of instructions to install a software module. Another example of a dynamic instruction set is a set of instructions to install a device driver for a new hardware component. The processing of dynamic instruction sets includes translation of opcodes into executable instruction sets and execution of those instruction sets. For example, a set of handset opcodes may be received from the update module server 60 along with a data payload. The opcodes are then translated into executable instructions for the handset. The processing of dynamic instruction sets also includes compilation of opcodes and corresponding data payloads for delivery to the update module server 60. Preferably, runtime engine 230 can be launched by wireless communication device 20, 30 on an as needed basis so that it runs only when necessary and consumes a minimal amount of system resources (e.g. memory, CPU cycles, etc.) on the handset 20, 30.

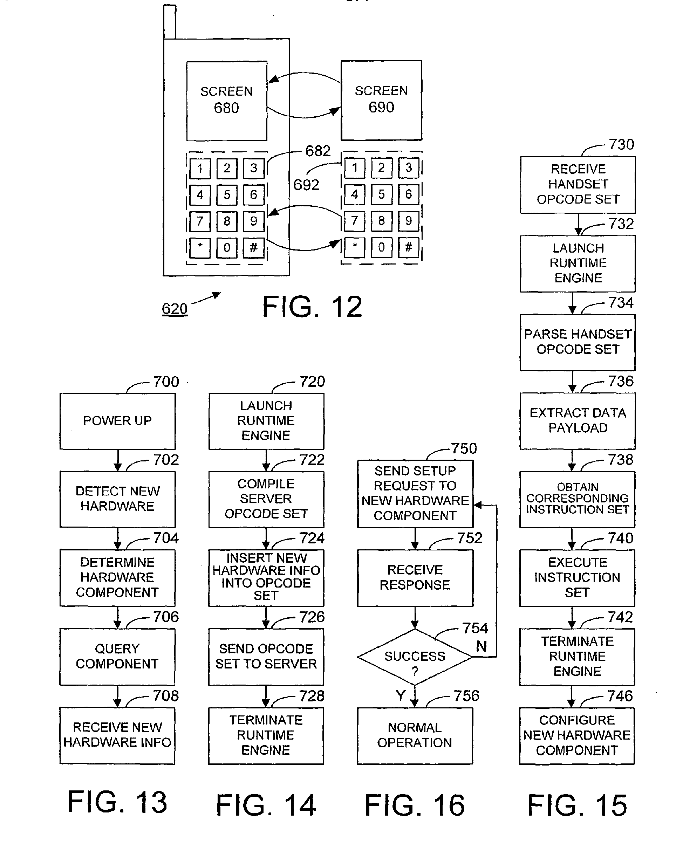

Referring now to Figure 12, a block diagram illustrates an example wireless communication device 620 and modular hardware components. In the illustrated embodiment, the handset 620 comprises a plurality of hardware modules including a screen 680 and a keypad 682. Additional hardware modules are also typically included in handset such as handset 620 and may include a radio chipset, for example. A hardware module is a component of the handset 620 that is capable of electrical communication within the handset. Inert components with no communication ability such as the casing are not considered to be hardware modules.

In the illustrated embodiment, the display screen 680 is interchangeable with a new display screen 690. For example, the screen 680 may be limited to displaying monochrome while the screen 690 may be capable of displaying color. Similarly, the keypad 682 is interchangeable with a new keypad 692. For example, the new keypad 692 have the ability to illuminate the keys while the keypad 682 may not have this ability.

Figure 3B is a block diagram illustrating elements of data 240 of another example wireless communication device 20. In the illustrated embodiment, the data 240 has a number of applications 242 comprising a modular hardware detector 202 and a runtime engine 230. Other data elements 244, which may be included in the application data 110 as illustrated in Figure 3A, comprise a server operation code ("opcode") library 210, handset opcode library 220, and runtime instructions 260.

The modular hardware detector 202 is preferably configured to determine when a new hardware module has been exchanged with a previous hardware module. In one embodiment, the modular hardware detector 202 function upon power up to detect the presence of a new hardware module. Alternatively, the modular hardware detector 202 may operate during the power on mode to detect any new hardware that was "hot" swapped, or otherwise replaced while the handset 20 was powered on. The modular hardware detector 202 can be implemented as a combination of electromechanical and software components to carry out the detection function and is preferably in communication with the runtime engine 230 to inform the runtime engine of newly detected hardware modules.

Additionally, the modular hardware detector 202 can be configured to determine the available space in persistent storage 240 where a new device driver is to be installed. For example, upon detecting a new hardware module, the modular hardware detector 202 preferably determines the amount of storage space used for the current device driver, e.g., device driver N illustrated in Figure 2, and the amount of storage space needed for the new device driver. In one embodiment, to determine the storage space used for the current device driver, the modular hardware detector 200 may query the operating system 100. Additionally, to determine the amount of storage space needed for the new device driver, the modular hardware detector 202 may query the update server 60, illustrated in Figure 1, through the runtime engine 230 to obtain that information.

If the current device driver and the new device driver are the same size or if the new device driver requires less storage space than the current device driver, then the new device driver can be installed in the same place in persistent storage where the current device driver is located. If the new device driver requires more storage space than the current driver, then the modular hardware detector 202 preferably can install the new device driver in another portion of the persistent storage area 240 that is newly allocated for device driver storage by the modular hardware detector 200. Alternatively, the modular hardware detector 202 may also query the user to identify data in persistent storage that can be deleted to make room for the new device driver.

The modular hardware detector 202 is preferably configured to instruct the operating system 100 to delete the current device driver after installation of the new device driver is successful. Preferably, the current device driver is backed up in persistent or volatile storage during the installation process for the new device driver.

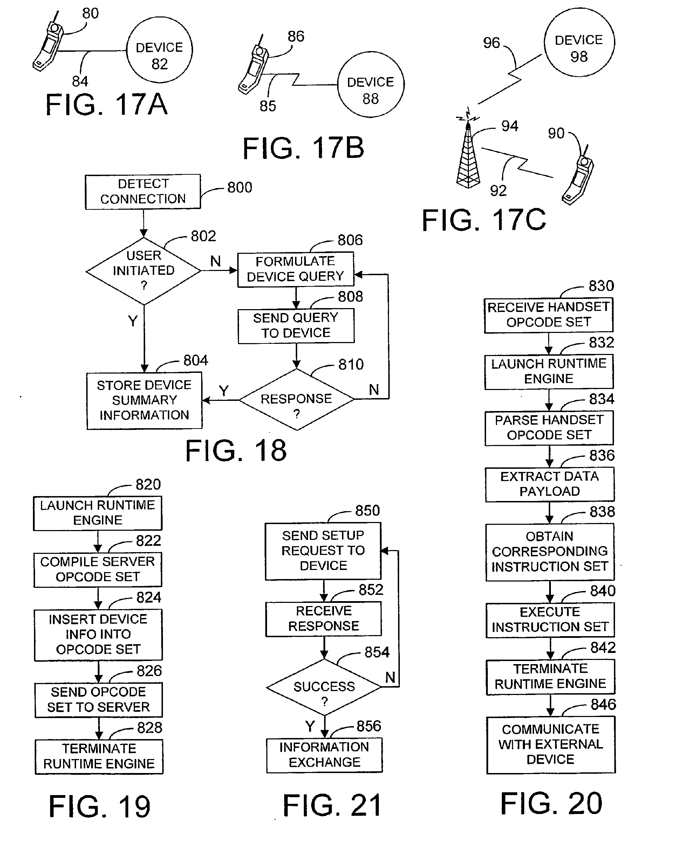

Referring now to Figure 17A, a block diagram illustrating an example direct physical connection 84 between a wireless communication device 80 and an external device 82 is shown. The direct physical connection 84 can be made through a standard or proprietary cable that connects to both the external device 82 and the handset 80. Alternatively, the direct physical connection 84 may be achieved by a coupling of the handset 80 and the external device such that no actual cable is employed and the resulting coupled devices become an integral unit.

Figure 17B is a block diagram illustrating an example direct wireless connection 85 between a wireless communication device 86 and an external device 88. The direct wireless connection 85 can be made through a variety of wireless links such as bluetooth, infrared, or the 802.11 and 802.15 families of wireless communication.

Figure 17C is a block diagram illustrating an example remote wireless connection between a wireless communication device 90 and an external device 98. The remote wireless connection may comprise a link 96 between the external device 98 and a base station 94 and also a link 92 between the handset 90 and the base station 94. There may also be interstitial networks and base stations (not shown). The remote wireless connection may be established using conventional wireless communication protocols or remote wireless networking protocols such as the 802.11 and 802.15 families of wireless communication.

Figure 3C is a block diagram illustrating components of data 240 of an example wireless communication device 20, 30. In the illustrated embodiment, the data 240 has a number of applications 242 comprising an external device detector 204 and a runtime engine 230. Other data elements 244, which may be included in the application data 110 as illustrated in Figure 2, comprise a server operation code ("opcode") library 210, handset opcode library 220, and runtime instructions 260.

The external device detector 204 is preferably configured to determine when an external device has been physically connected to the handset 20, 30, or when an external device is attempting a connection to the handset 20, 30 via a wireless link. Additionally, the external device detector 204 is preferably capable of detecting pilot signals or other broadcast wireless signals to determine if an external device is within proximity of the handset such than a connection can be made. The external device detector 204 can be implemented as a combination of electromechanical and software components to carry out the detection function.

Although Figures 3A and 3B and 3C illustrate three separate examples of a modular software interface 200, a modular hardware detector 202, and an external device detector 204, it should be appreciated that the interface 200, the hardware detector 202 and the external device detector may reside in a persistent storage area 240 of a communication device 20 in any combination.

Figure 3D is a block diagram illustrating an example operation code library and corresponding runtime instruction set 260. The handset opcode library 220 and runtime instruction set 260 are preferably housed in the data storage area 240 of the handset 20, 30. In one embodiment, the executable instructions in the runtime instruction set 260 correspond in a one-to-one relationship with the opcodes contained in the handset opcode library 220. Alternatively, a single opcode in the handset opcode library 220 may correspond to a sequence of many executable instructions in the runtime instructions 260.

Figure 3E is a block diagram illustrating an example set of runtime instructions 260. In the illustrated embodiment, any number of executable instructions can be included in runtime instructions 260, from instruction 1 through instruction n. Optimally, a large number of functions are available in runtime instructions 260 and yet consume very little resources (e.g. persistent memory) of the handset 20, 30.

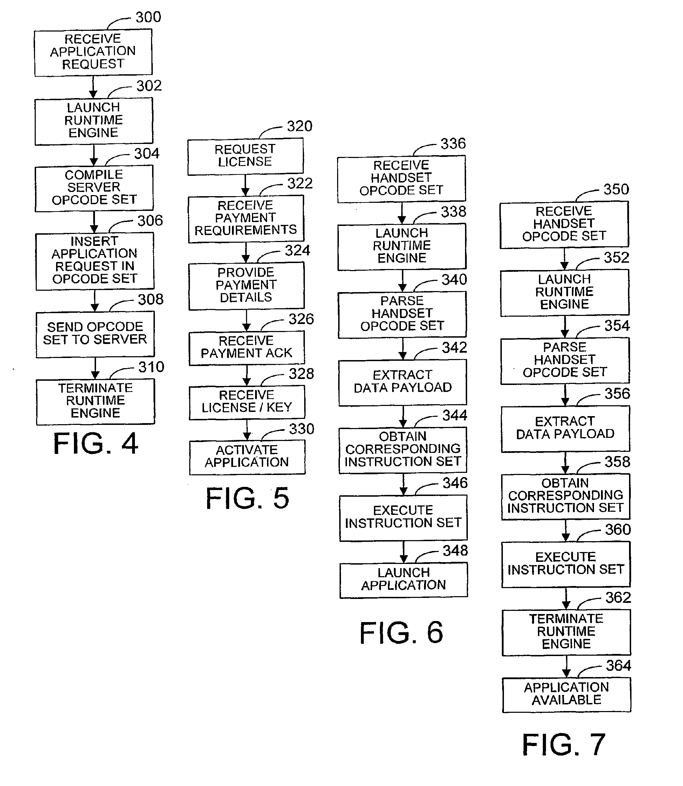

Figure 4 is a flow diagram illustrating an example process for a user initiated software module download. Initially, in step 300 the handset receives the application request from the user. The request may be received, for example, by the modular software interface 200. Next, in step 302 the runtime engine is launched. Once the runtime engine is running, the engine can compile a set of server opcodes according to the action that needs to be taken, as shown in step 304. In this case, the set of server opcodes to be compiled is preferably for downloading the requested software application or module. The set of server opcodes may be obtained from a background process running on the wireless device. Alternatively, the server opcode set may be obtained from a process running on the wireless device under the direction of a user. The compiled set of server opcodes preferably causes the server to reply with the requested software module, as previously described.

For example, the wireless device receives an instruction from a user to download an extension module to the phone book application so that a total of 500 contacts can be maintained rather than the previous 100 contacts. The user provides the name or identification of the new software module to be downloaded. A server opcode set is then compiled that instructs the modular software server to provide the handset with the appropriate software module so that the handset may increase the total number of contacts. In such a case, the result is a server opcode set generated by the runtime engine, as shown in step 304.

Once the server opcode set has been generated, the runtime engine includes the name or identification information in the data payload that will be delivered with the server opcode set. For example, the runtime engine may fetch the application or software module data from persistent or volatile memory, or execute an instruction that returns the data needed, for example through the modular software interface 200. Once the data has been obtained, the run time engine 230 next inserts the data into the server opcode set, as illustrated in step 306. One simple way to achieve this is to append the data payload to the server opcode set in a single data packet.

Once the data payload has been combined with the server opcode set, then the runtime engine sends the server opcode set with the corresponding data payload to the server, as shown in step 308. After the server opcode set and data payload has been sent, the runtime engine may be terminated to free up resources on the wireless device, as illustrated in step 310.

Figure 5 is a flow diagram illustrating an example process for activating a resident software module on a wireless communication device. The process shown in Figure 5 may be carried out through the use of opcode sets or through the use of some other wireless data communication means. Initially, in step 320, the handset requests a license from a network license server. The software license manager 205, illustrated in Figure 3A, preferably initiates this step. The network license server can be the same server as the update module server 60 or it may be a different and separate server. Once the request has been sent, the handset 20, 30 next receives payment requirements from the network license server as shown in step 322. In response, the handset provides payment details to the network license server, as illustrated in step 324.

In one embodiment, the handset may be configured to provide payment details automatically. Alternatively, the handset may be configured to request this information from the user to ensure that the user is willing to pay for the requested license. After sending the payment details, in step 326 the handset receives an acknowledgement of the license server's receipt of the payment details. In one embodiment, this acknowledgement may also serve as a confirmation that the payment has been processed.

Once the acknowledgement has been received, in step 328 the handset next receives a license or activation key from the license server. Preferably, the activation key is configured to allow use of the application on the handset. Once the key has been received, then the application can be activated as illustrated in step 330.

Figure 6 is a flow diagram illustrating an example process for a network initiated software module download. Initially, in step 336, the wireless device receives a set of handset opcodes. The set of handset opcodes can be received via an over-the-air communication link, for example a link with a wireless communication network. Preferably, the opcodes are optimized to minimize the amount of data sent over-the-air. Additionally, a data payload can be included with the set of opcodes received by the handset. In the illustrated embodiment, the handset opcode set is received from a network update module server 60.

In step 338, the wireless device launches its runtime engine to process the handset opcode set. Alternatively, the handset may first authenticate the network server sending the handset opcode set. As illustrated in step 340, the runtime engine parses the handset opcode set and then extracts the data payload in step 342. If no data payload exists, then this step can be skipped, however, the network update module server 60 may include the executable software application in the initial transmission. Alternatively, the handset opcode set may instruct the handset to request the software module from the server. If a data payload does exist, then the resulting data can be stored in an available portion of volatile memory for later use.

Next, in step 344, the runtime engine obtains the executable instructions that correspond to the opcodes in the handset opcode set. These instructions can be obtained from the remote runtime instructions set stored in persistent storage on the data storage area of the handset.

Once the executable instructions corresponding to the opcodes in the handset opcode set have been obtained, the runtime engine executes the instructions, as illustrated in step 346. When the instructions are being executed, any necessary data to be operated on (or installed) can be obtained from volatile memory where the data payload is stored. Alternatively, or additionally, any necessary data to be operated on may be obtained as the result of an executed instruction.

For example, the data payload may comprise the software application that the network has requested the handset to install. Additionally, one or more of the opcodes in the handset opcode set preferably correspond to one or more executable instructions for storing the data payload in persistent memory on the handset. In this example, once the data payload comprising the software module is stored in persistent memory, the handset may thereafter allow the application to be used by a user, or alternatively by a remote network command. Alternatively, the data payload may replace a portion of persistent memory that contains an outdated software application or module or one selected for deletion in order to make room for the new software module. Thus, the handset opcode set and data payload operate on the wireless device to install new software modules for the handset. Additional opcodes and instructions may also be employed to configure the new module or application once it has been installed, if necessary.

Once the instruction set has been executed in its entirety by the runtime engine, the runtime engine can be terminated, and then the application may be executed, as shown in step 348. A particularly illustrative example will explain how the network initiated download may be employed. If a handset is in a vehicle that has been lost or stolen, the handset may be contacted by the network and instructed to download a GPS module (assuming the handset has GPS capable hardware). Once the GPS module is downloaded and installed, the GPS module may begin reporting location information to the network, which in turn may be provide to the owner of the vehicle or the authorities to tacilitate tracking of the vehicle. Advantageously, this may all be accomplished without the knowledge of the people in proximity to the handset.

Figure 7 is flow diagram illustrating an example process for installing a software module on a wireless communication device. Initially, in step 350, the wireless device receives a set of handset opcodes. The set of handset opcodes can be received via an over-the-air communication link, for example a link with a wireless communication network. Preferably, the opcodes are optimized to minimize the amount of data sent over-the-air. Additionally, a data payload can be included with the set of opcodes received by the handset. In the illustrated embodiment, the handset opcode set is received from a network software module server.

In step 352, the wireless device launches its runtime engine to process the handset opcode set. Alternatively, the handset may first authenticate the network server sending the handset opcode set. As illustrated in step 354, the runtime engine parses the handset opcode set and then extracts the data payload in step 356. If no data payload exists, then this step can be skipped, however, the network software module server may include the executable software application in the initial transmission. Alternatively, the handset opcode set may instruct the handset to request the software module from the server. If a data payload does exist, then the resulting data can be stored in an available portion of volatile memory for later use.

Next, in step 358, the runtime engine obtains the executable instructions that correspond to the opcodes in the handset opcode set. These instructions can be obtained from the remote runtime instructions set stored in persistent storage on the data storage area of the handset. Once the executable instructions corresponding to the opcodes in the handset opcode set have been obtained, the runtime engine executes the instructions, as illustrated in step 360. When the instructions are being executed, any necessary data to be operated on (or installed) can be obtained from volatile memory where the data payload is stored. Alternatively, or additionally, any necessary data to be operated on may be obtained as the result of an executed instruction. Once the instruction set has been executed in its entirety by the runtime engine, in step 362 the runtime engine can be terminated, and then the application is available for use, as shown in step 364.

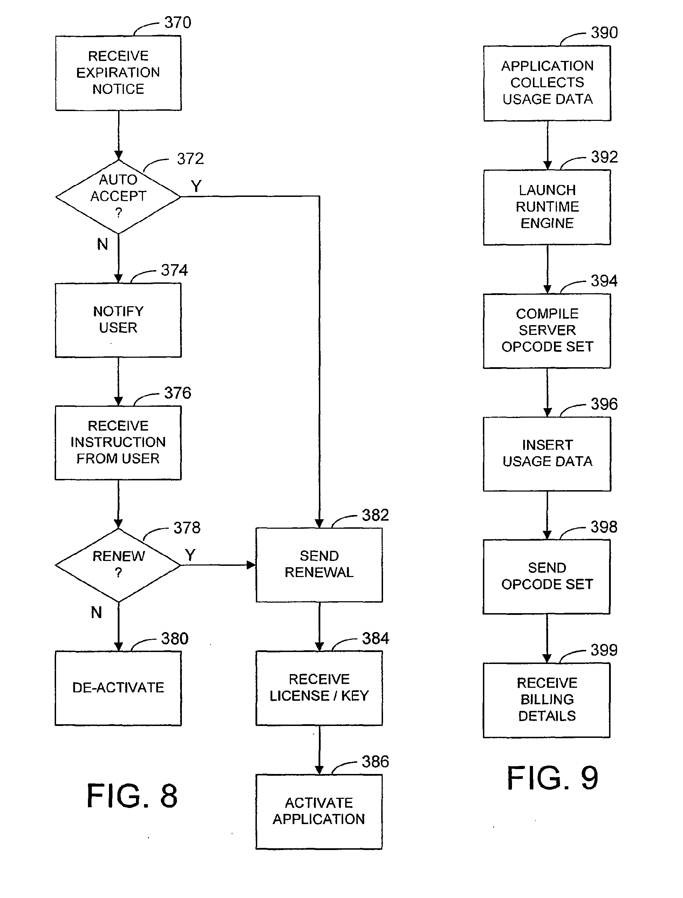

Figure 8 is flow diagram illustrating an example process for expiring a software module on a wireless communication device. Initially, in step 370, the handset receives an expiration notice. The expiration notice can be received via a wireless communication network and originate from a licensing server communicatively coupled with the handset via the network. In one embodiment, the expiration notice may be linked to a trial period for the software module or may be linked to an annual license fee for the module.

Once the expiration notice is received by the handset, the handset determines in step 372 whether it has been instructed to automatically renew the license or make an initial payment for the module. If the handset determines that it is not authorized or has not been instructed to automatically renew or pay, then in step 374 the handset notifies the user of the expiration notice for the software module.

The notification can be made by presenting a message on the display of the handset or by generating a text message that is stored in memory on the handset for later review. The notification may also be visual such as a message on the display or a blinking light or it may also be audio such as a prerecorded message or tone. Alternatively, the blinking light or audio tone (or vibration of the handset) may indicate that a message is available for the user and the message may provide the detail of the expiration notice. Additionally, the handset may also send a message to the network (or the network may initiate the process) such that a pre-recorded voice message is left in the user's voice mail box that informs the user of the expiration notice. A variety of other notification methods may also be employed, as will be understood by those having skill in the art.

Once the user has been informed of the expiration notice, the handset receives an instruction from the user in step 376. This instruction is examined by the handset in step 378 to determine if the license should be renewed (or if the initial payment should be made). If the instruction from the user is to not renew (or pay), then in step 380 the handset deactivates the software module. In one embodiment, the handset may wait until the end of the license period or evaluation period before deactivation. Additionally, if no instruction is received from the user as determined by step 378, the lack of an instruction can be interpreted as a negative response and the software module deactivated in step 380.

If the handset, in step 378 determines that the instruction from the user is to renew or pay, then the handset sends a renewal instruction (or initial payment instruction) to the network or license server, as illustrated in step 382. Additionally, if, in step 372 the handset determines that it is authorized to automatically renew or pay, then the handset also sends the appropriate instruction in step 382. On the receiving end of the renewal instruction (e.g., the license server), the payment may be effected by a credit card charge or the addition of a line item on the customer's bill for the handset service.

In response to the instruction to pay or renew, the handset may receive a license or a key that can be employed to instruct the software to continue operation or to allow additional functionality, as shown in step 384. In step 386, the application is activated with the license or key so that the user may thereafter use the software module or application for the new license period.

Figure 9 is flow diagram illustrating an example process for paying for using a software module on a wireless communication device. Initially, in step 390, an application may collect usage data for the application itself or for other applications on the handset. This data can preferably be stored in persistent memory on the handset. Next, in step 392 the runtime engine is launched. Once the runtime engine is running, the engine can compile a set of server opcodes, as shown in step 394. The compiled set of server opcodes preferably causes the server to process the usage data contained in the corresponding data payload, which is inserted into the opcode set (or appended to the opcode set) in step 396.

Once the data payload has been combined with the server opcode set, then the runtime engine sends the server opcode set with the corresponding data payload to the server, as shown in step 398. After the server opcode set and data payload has been sent, the handset preferably receives billing details from the server, as shown in step 399. Preferably, the billing details relate to the usage data provided with the server opcode set. Finally, the runtime engine may be terminated to free up resources on the wireless device.

Figure 13 is a flow diagram illustrating an example process for obtaining summary information from a new hardware component. Initially, in step 700, the handset powers up. Preferably, upon power up the handset investigates its various hardware components, for example, by communicating with each component to determine its status. Alternatively, if the handset is already operational, the handset may, on its own initiative (e.g., due to a pre-scheduled event) or by way of an external instruction (e.g., received from a network or user), initiate the same investigation process to determine the status of the various hardware components.

Next, in step 702 the handset detects a new hardware component. The new component does not need to be a new functional component, but can be a replacement of a previous hardware module, e.g., a new display screen. Upon detecting a new hardware component, the handset next determines in step 704 the type of component it is, for example, screen, keypad, radio chipset, or the like. The handset then queries the new component in step 706 to obtain information about the new component. This new component information is received by the handset in step 708 and preferably stored in persistent or volatile memory. In one embodiment, the new hardware module information includes an identifier that uniquely identifies the new hardware module.

Figure 14 is a flow diagram illustrating an example process for requesting a device driver for a new hardware component from a remote server. Initially, in step 720 the runtime engine is launched. Once the runtime engine is running, the engine can compile a set of server opcodes, as shown in step 722. The set of server opcodes may be obtained from a background process running on the wireless device 20, 30. Alternatively, the server opcode set may be obtained from a process running on the wireless device under the direction of a user. The compiled set of server opcodes preferably causes the server to reply with an executable device driver to allow the handset to communicate with and fully utilize the functionality of the new hardware module.

For example, the wireless device detects a new hardware module has been installed. The new hardware module is queried and summary profile information is obtained. A server opcode set is compiled instructing the server to provide the handset with an executable device driver for the new hardware module so that the handset may communicate with the new hardware module. In such as case, the result is a server opcode set generated by the runtime engine, as shown in step 722.

Once the server opcode set has been generated, the runtime engine includes the information for the new hardware module in the data payload that corresponds to the server opcode set. For example, the runtime engine may fetch the hardware module information from persistent or volatile memory, or execute an instruction that returns the data needed. Once the data has been obtained, the runtime engine next inserts the new hardware module information into the server opcode set, as illustrated in step 724. One simple way to achieve this is to append the data payload to the server opcode set in a single data packet.

Once the data payload has been combined with the server opcode set, then the runtime engine sends the server opcode set with the corresponding data payload to the server, as shown in step 726. After the server opcode set and data payload has been sent, the runtime engine may be terminated to free up resources on the wireless device, as illustrated in step 728.

Figure 15 is a flow diagram illustrating an example process for installing a device driver for a new hardware component on a wireless communication device. Initially, in step 730, the wireless device receives a set of handset opcodes. The set of handset opcodes can be received via an over-the-air communication link, for example a link with a wireless communication network. Preferably, the opcodes are optimized to minimize the amount of data sent over-the-air. Additionally, a data payload can be included with the set of opcodes received by the handset.

In step 732, the wireless device launches its runtime engine to process the handset opcode set. As illustrated in step 734, the runtime engine parses the handset opcode set and then extracts the data payload in step 736. The data payload is preferably stored in an available portion of volatile memory for later use. Next, the runtime engine obtains the executable instructions that correspond to the opcodes in the handset opcode set as shown in step 738. These instructions can be obtained from the remote runtime instructions set stored in persistent storage on the data storage area of the handset.

Once the executable instructions corresponding to the opcodes in the handset opcode set have been obtained, the runtime engine executes the instructions, as illustrated in step 740. When the instructions are being executed, any necessary data to be operated on can be obtained from volatile memory where the data payload is stored. Alternatively, or additionally, any necessary data to be operated on may be obtained as the result of an executed instruction. Preferably, the execution of the instruction set causes the device driver for the new hardware module to be installed on the handset.

For example, the data payload comprises the device driver needed by the handset to communicate with the new hardware module. Additionally, one or more of the opcodes in the handset opcode set preferably correspond to one or more executable instructions for storing the data payload in persistent memory on the handset. In this example, once the data payload comprising the device driver is stored in persistent memory, the handset may thereafter communicate with the new hardware module using the device driver, which preferably is configured to take full advantage of the functionality of the new hardware module.

Alternatively, the data payload may replace a portion of persistent memory that contains an outdated device driver for the hardware component that was replaced. Thus, the handset opcode set and data payload operate on the wireless device to install a new device driver for the new hardware module. Additional opcodes and instructions may also be employed to configure the new device driver or other aspects of the handset once the new device driver has been installed.

Once the instruction set has been executed in its entirety by the runtime engine, the runtime engine can be terminated, as shown in step 742. Advantageously, the runtime engine may be launched and terminated so that it only runs when necessary. This saves system resources on the wireless device, for example it may save volatile memory space, CPU cycles, and battery life. Once the device driver for the new hardware module has been installed and configured for use, as illustrated in step 746, the handset may begin using the new hardware module in the course of normal operation.

Figure 16 is flow diagram illustrating an example process for configuring a new hardware component on a wireless communication device. Initially, in step 750, the handset uses the new device driver to send a setup request to the new hardware module. Next, in step 752, the handset receives a response from the new hardware module. In one embodiment the response may comprise more comprehensive profile information about the hardware module that can be interpreted by the device driver to fine tune the operation of the device. For example, the response may provide the device driver with additional information relating to the hardware component or its communication capabilities such as its interface version or other information to make communication between the device driver and the new hardware module more efficient.

Alternatively, the response may be an indication of an unsuccessful attempt to communicate with the new hardware module, as determined in step 754. If the setup request received a response indicating that the setup was unsuccessful, the handset returns to step 750 and sends another setup request. In one embodiment, the handset may cycle through a predetermined number (e.g., N) of setup requests until a request that is formatted correctly is provided to the new hardware component. For example, the various setup requests may conform to different versions of the interface or different communication modes for the device driver.

There may also be synchronization issues for the device driver and the new hardware module to work through in an iterative process. Accordingly, the particular setup request that receives a successful response may advantageously provide the device driver with important information about the version of the firmware that is installed on the new hardware module, the capabilities of the new hardware module, and other information about the new hardware module. Once a successful response is received from the new hardware module, as determined in step 754, the handset may proceed to use the new hardware module in the course of normal operation as shown in step 756. If no successful response is received in the N setup requests, the old device driver can be restored. Advantageously, backward compatible devices will operate with the old device driver, although new or improved functionality may not be available through the old device driver.

A flow diagram illustrating an example process for obtaining summary information from an external device is shown in Figure 18 for another embodiment of the present invention. Initially, in step 800, the handset detects a connection from an external device. The connection can be detected over a wired or wireless link. Upon detecting a connection, the handset determines if the connection was initiated by a user, as shown in step 802. For example, the user may press a sequence of keys or issue spoken commands to instruct the handset that a new device is connected. In one embodiment, if the connection is user initiated, summary device information is provided to the handset directly from the user. In such an embodiment, the handset next stores the summary device information in step 804.

Alternatively, if the detection was not user initiated, then the handset next formulates a query for the external device, as illustrated in step 806. The query can advantageously conform to a standard protocol or it may be a proprietary protocol. Once the query is formulated, the handset sends the query to the external device in step 808. In step 810, the handset determines if a valid response was received from the external device. If there was no response or the response was invalid, the handset can return to step 806 and reformulate the query and proceed to query the external device again. Advantageously, the handset may cycle through a variety of known query formats and protocols until a valid response is received. Once a valid response is received that preferably includes summary profile information about the external device, the handset stores the summary profile information, as shown in step 304.

Figure 19 is a flow diagram illustrating an example process for requesting interface software from a remote server. Initially, in step 820 the runtime engine is launched. Once the runtime engine is running, the engine can compile a set of server opcodes, as shown in step 822. The set of server opcodes may be obtained from a background process running on the wireless device. Alternatively, the server opcode set may be obtained from a process running on the wireless device under the direction of a user. The compiled set of server opcodes preferably causes the server to reply with an executable interface for the particular external device that is connected to the handset.

For example, the wireless device detects a connection from an external device. The external device is queried and summary profile information is obtained. A server opcode set is compiled instructing the server to provide the handset with an executable interface for the external device so that the handset may communicate with the external device. In such as case, the result is a server opcode set generated by the runtime engine, as shown in step 822.

Once the server opcode set has been generated, the runtime engine includes the summary information for the external device in the data payload that corresponds to the server opcode set. For example, the runtime engine may fetch the summary profile data from persistent or volatile memory, or execute an instruction that returns the data needed. Once the data has been obtained, the run time engine next inerts the data into the server opcode set, as illustrated in step 824. One simple way to achieve this is to append the data payload to the server opcode set in a single data packet.

Once the data payload has been combined with the server opcode set, then the runtime engine sends the server opcode set with the corresponding data payload to the server, as shown in step 826. After the server opcode set and data payload has been sent, the runtime engine may be terminated to free up resources on the wireless device, as illustrated in step 828.

Figure 20 is a flow diagram illustrating an example process for installing interface software on a wireless communication device. Initially, in step 830, the wireless device receives a set of handset opcodes. The set of handset opcodes can be received via an over-the-air communication link, for example a link with a wireless communication network. Preferably, the opcodes are optimized to minimize the amount of data sent over-the-air. Additionally, a data payload can be included with the set of opcodes received by the handset.

In step 832, the wireless device launches its runtime engine to process the handset opcode set. As illustrated in step 834, the runtime engine parses the handset opcode set and then extracts the data payload in step 836. If no data payload exists, then this step can be skipped. If a data payload does exist, then the resulting data can be stored in an available portion of volatile memory for later use. Next, the runtime engine obtains the executable instructions that correspond to the opcodes in the handset opcode set as shown in step 838. These instructions can be obtained from the remote runtime instructions set stored in persistent storage on the data storage area of the handset.

Once the executable instructions corresponding to the opcodes in the handset opcode set have been obtained, the runtime engine executes the instructions, as illustrated in step 840. When the instructions are being executed, any necessary data to be operated on can be obtained from volatile memory where the data payload is stored. Alternatively, or additionally, any necessary data to be operated on may be obtained as the result of an executed instruction.

For example, the data payload may comprise the interface needed by the handset to communicate with the external device. Additionally, one or more of the opcodes in the handset opcode set preferably correspond to one or more executable instructions for storing the data payload in persistent memory on the handset. In this example, once the data payload comprising the interface is stored in persistent memory, the handset may thereafter communicate with the device using the executable interface. Alternatively, the data payload may replace a portion of persistent memory that contains an outdated interface for the particular external device. Thus, the handset opcode set and data payload operate on the wireless device to install a new interface for the external device. Additional opcodes and instructions may also be employed to configure the new interface once it has been installed, if necessary.

Once the instruction set has been executed in its entirety by the runtime engine, the runtime engine can be terminated, as shown in step 842. Advantageously, the runtime engine may be launched and terminated so that it only runs when necessary. This saves system resources on the wireless device, for example it may save volatile memory space and CPU cycles. Once the interface for the external device has been installed and configured for use, the handset may begin communicating with the external device, as illustrated in step 846.

Figure 21 is flow diagram illustrating an example process for initializing an external device. Initially, in step 850, the handset uses the new interface to send a setup request to the external device. Next, in step 852, the handset receives a response from the external device. In one embodiment the response may comprise more comprehensive profile information about the device. For example, the response may provide the handset with additional information relating to the communication interface such as the interface version or other information to make communication between the devices more efficient.

Alternatively, the response may be an indication of an unsuccessful attempt to initialize the external device, as determined in step 854. If the setup request received a response indicating that the setup was unsuccessful, the handset returns to step 850 and sends another setup request. In one embodiment, the handset may cycle through various setup requests until a request that is formatted correctly is provided to the external device. For example, the various setup requests may conform to different versions of the interface. Accordingly, the particular setup request that receives a successful response may advantageously provide the handset with important information about thr version of the firmware that is installed on the external device, the capabilities of the external device, and other information about to the external device. Once a successful response is received from the external device, as determined in step 854, the handset may proceed to exchange information with the external device as shown in step 856.

Figure 10 is a block diagram illustrating an exemplary wireless communication device 450 that may be used in connection with the various embodiments described herein. For example, the wireless communication device 450 may be used in conjunction with a handset or PDA network device or as a part of a sensor node in a wireless mesh network. However, other wireless communication devices and/or architectures may also be used, as will be clear to those skilled in the art.

In the illustrated embodiment, wireless communication device 450 comprises an antenna 452, a multiplexor 454, a low noise amplifier ("LNA") 456, a power amplifier ("PA") 458, a modulation circuit 460, a baseband processor 462, a speaker 464, a microphone 466, a central processing unit ("CPU") 468, a data storage area 470, and a hardware interface 472. In the wireless communication device 450, radio frequency ("RF") signals are transmitted and received by antenna 452. Multiplexor 454 acts as a switch, coupling antenna 452 between the transmit and receive signal paths.
In the receive path, received RF signals are coupled from a multiplexor 454 to LNA 456. LNA 456 amplifies the received RF signal and couples the amplified signal to a demodulation portion of the modulation circuit 460.

Typically modulation circuit 460 will combine a demodulator and modulator in one integrated circuit ("IC"). The demodulator and modulator can also be separate components. The demodulator strips away the RF carrier signal leaving a base-band receive signal, which is sent from the demodulator output to the base-band processor 462.

If the base-band receive audio signal contains audio information, then base-band processor 462 decodes the signal and converts it to an analog signal. Then the signal is amplified and sent to the speaker 464. The base-band processor 462 also receives analog audio signals from the microphone 466. These analog audio signals are converted to digital signals and encoded by the base-band processor 462. The base-band processor 462 also codes the digital signals for transmission and generates a base band transmit audio signal that is routed to the modulator portion of modulation circuit 460. The modulator mixes the base-band transmit audio signal with an RF carrier signal generating an RF transmit signal that is routed to the power amplifier 458. The power amplifier 458 amplifies the RF transmit signal and routes it to the multiplexor 454 where the signal is switched to the antenna port for transmission by antenna 452.

The baseband processor 462 is also communicatively coupled with the central processing unit 468. The central processing unit 468 has access to a data storage area 470. The central processing unit 468 is preferably configured to execute instructions (i.e., computer programs or software) that can be stored in the data storage area 470. Computer programs can also be received from the baseband processor 462 and stored in the data storage area 470 or executed upon receipt. Such computer programs, when executed, enable the wireless communication device 450 to perform the various functions of the present invention as previously described.

In this description, the term "computer readable medium" is used to refer to any media used to provide executable instructions (e.g., software and computer programs) to the wireless communication device 450 for execution by the central processing unit 468. Examples of these media include the data storage area 470, microphone 466 (via the baseband processor 462), antenna 452 (also via the baseband processor 462), and hardware interface 472. These computer readable mediums are means for providing executable code, programming instructions, and software to the wireless communication device 450. The executable code, programming instructions, and software, when executed by the central processing unit 468, preferably cause the central processing unit 468 to perform the inventive features and functions previously described herein.

The central processing unit is also preferably configured to receive notifications from the hardware interface 472 when new devices are detected by the hardware interface. Hardware interface 472 can be a combination electromechanical detector with controlling software that communicates with the CPU 468 and interacts with new devices.

Figure 11 is a block diagram illustrating an exemplary computer system 550 that may be used in connection with the various embodiments described herein. For example, the computer system 550 may be used in conjunction with a remote server configured to process server opcode sets and create and send handset opcode sets. However, other computer systems and/or architectures may be used, as will be clear to those skilled in the art.

The computer system 550 preferably includes one or more processors, such as processor 552. Additional processors may be provided, such as an auxiliary processor to manage input/output, an auxiliary processor to perform floating point mathematical operations, a special-purpose microprocessor having an architecture suitable for fast execution of signal processing algorithms (e.g., digital signal processor), a slave processor subordinate to the main processing system (e.g., back-end processor), an additional microprocessor or controller for dual or multiple processor systems, or a coprocessor. Such auxiliary processors may be discrete processors or may be integrated with the processor 552.

The processor 552 is preferably connected to a communication bus 554. The communication bus 554 may include a data channel for facilitating information transfer between storage and other peripheral components of the computer system 550. The communication bus 554 further may provide a set of signals used for communication with the processor 552, including a data bus, address bus, and control bus (not shown). The communication bus 554 may comprise any standard or non-standard bus architecture such as, for example, bus architectures compliant with industry standard architecture ("ISA"), extended industry standard architecture ("EISA"), Micro Channel Architecture ("MCA"), peripheral component interconnect ("PCI") local bus, or standards promulgated by the Institute of Electrical and Electronics Engineers ("IEEE") including IEEE 488 general-purpose interface bus ("GPIB"), IEEE 696/S-100, and the like.

Computer system 550 preferably includes a main memory 556 and may also include a secondary memory 558. The main memory 556 provides storage of instructions and data for programs executing on the processor 552. The main memory 556 is typically semiconductor-based memory such as dynamic random access memory ("DRAM") and/or static random access memory ("SRAM"). Other semiconductor-based memory types include, for example, synchronous dynamic random access memory ("SDRAM"), Rambus dynamic random access memory ("RDRAM"), ferroelectric random access memory ("FRAM"), and the like, including read only memory ("ROM").

The secondary memory 558 may optionally include a hard disk drive 560 and/or a removable storage drive 562, for example a floppy disk drive, a magnetic tape drive, a compact disc ("CD") drive, a digital versatile disc ("DVD") drive, etc. The removable storage drive 562 reads from and/or writes to a removable storage medium 564 in a well-known manner. Removable storage medium 564 may be, for example, a floppy disk, magnetic tape, CD, DVD, etc.

The removable storage medium 564 is preferably a computer readable medium having stored thereon computer executable code (i.e., software) and/or data. The computer software or data stored on the removable storage medium 564 is read into the computer system 550 as electrical communication signals 578.

In alternative embodiments, secondary memory 558 may include other similar means for allowing computer programs or other data or instructions to be loaded into the computer system 550. Such means may include, for example, an external storage medium 572 and an interface 570. Examples of external storage medium 572 may include an external hard disk drive or an external optical drive, or and external magneto-optical drive.

Other examples of secondary memory 558 may include semiconductor-based memory such as programmable read-only memory ("PROM"), erasable programmable read-only memory ("EPROM"), electrically erasable read-only memory ("EEPROM"), or flash memory (block oriented memory similar to EEPROM). Also included are any other removable storage units 572 and interfaces 570, which allow software and data to be transferred from the removable storage unit 572 to the computer system 550.

Computer system 550 may also include a communication interface 574. The communication interface 574 allows software and data to be transferred between computer system 550 and external devices (e.g. printers), networks, or information sources. For example, computer software or executable code may be transferred to computer system 550 from a network server via communication interface 574. Examples of communication interface 574 include a modem, a network interface card ("NIC"), a communications port, a PCMCIA slot and card, an infrared interface, and an IEEE 1394 fire-wire, just to name a few.

Communication interface 574 preferably implements industry promulgated protocol standards, such as Ethernet IEEE 802 standards, Fiber Channel, digital subscriber line ("DSL"), asynchronous digital subscriber line ("ADSL"), frame relay, asynchronous transfer mode ("ATM"), integrated digital services network ("ISDN"), personal communications services ("PCS"), transmission control protocol/Internet protocol ("TCP/IP"), serial line Internet protocol/point to point protocol ("SLIP/PPP"), and so on, but may also implement customized or non-standard interface protocols as well.

Software and data transferred via communication interface 574 are generally in the form of electrical communication signals 578. These signals 578 are preferably provided to communication interface 574 via a communication channel 576. Communication channel 576 carries signals 578 and can be implemented using a variety of communication means including wire or cable, fiber optics, conventional phone line, cellular phone link, radio frequency (RF) link, or infrared link, just to name a few.

Computer executable code (i.e., computer programs or software) is stored in the main memory 556 and/or the secondary memory 558. Computer programs can also be received via communication interface 574 and stored in the main memory 556 and/or the secondary memory 558. Such computer programs, when executed, enable the computer system 550 to perform the various functions of the present invention as previously described.

In this description, the term "computer readable medium" is used to refer to any media used to provide computer executable code (e.g., software and computer programs) to the computer system 550. Examples of these media include main memory 556, secondary memory 558 (including hard disk drive 560, removable storage medium 564, and external storage medium 572), and any peripheral device communicatively coupled with communication interface 574 (including a network information server or other network device). These computer readable mediums are means for providing executable code, programming instructions, and software to the computer system 550.

In an embodiment that is implemented using software, the software may be stored on a computer readable medium and loaded into computer system 550 by way of removable storage drive 562, interface 570, or communication interface 574. In such an embodiment, the software is loaded into the computer system 550 in the form of electrical communication signals 578. The software, when executed by the processor 552, preferably causes the processor 552 to perform the inventive features and functions previously described herein.

Various embodiments may also be implemented primarily in hardware using, for example, components such as application specific integrated circuits ("ASICs"), or field programmable gate arrays ("FPGAs"). Implementation of a hardware state machine capable of performing the functions described herein will also be apparent to those skilled in the relevant art. Various embodiments may also be implemented using a combination of both hardware and software.

While the particular modular software components for wireless communication devices herein shown and described in detail is fully capable of attaining the above described objects of this invention, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly limited by nothing other than the appended claims.

## Claims

1. A method for dynamically installing a data component (240) on a deployed wireless communication device (20, 30), comprising
a runtime engine of the deployed wireless communication device receiving a communication to install the data component, the communication comprising a unique identifier for the requested data component, wherein the runtime engine receives the communication from at least one of a modular software interface (200) configured to receive a user initiated software module download, a modular hardware detector (202) configured to detect a new hardware component installed in the wireless communication device, and an external device detector (204) configured to detect connection of an external device;
the runtime engine compiling a server query, the server query comprising the unique identifier and at least one server operation code corresponding to at least one server instruction executable by a remote server, the at least one server operation code housed in a server opcode library of the deployed wireless communication device;
sending the server query to the remote server (60) via a wireless communication network (50); and
receiving a response from the remote server (60) via the wireless communication network (50), wherein the response comprises the data component (240).

2. The method of claim 1, wherein the data component is a software module.

3. The method of claim 2, further comprising the steps of:
identifying an existing software module to be deleted; and
deleting the identified existing software module to be deleted from the deployed wireless communication device to free up storage space for the software module.

4. The method of claim 2, wherein the receiving a response from the remote server step further comprises:
receiving a handset instruction set having a corresponding data payload;
extracting the data payload, wherein the data payload comprises the software module;
obtaining a set of executable instructions corresponding to the handset instruction set; and
executing the set of executable instructions to install the software module.

5. The method of claim 4, wherein the executing the set of executable instructions step is carried out within a runtime engine operating on the wireless communication device.

6. The method of claim 1, wherein the data component is an executable device driver for the new hardware component and installation instructions, further comprising the steps of:
the modular hardware detector (202) of the wireless communication device detecting a presence of the new hardware component in the wireless communication device, the new hardware component replacing a previous hardware component having a previous device hardware driver; and
querying the new hardware component to obtain profile information for the new hardware component;
wherein the unique identifier comprises at least a portion of the profile information.

7. The method of claim 6, further comprising the steps of:
installing the executable device driver; and
configuring the new hardware component.

8. The method of claim 6, wherein the receiving the data component further comprises the steps of:
receiving a handset instruction set having a sequence of operation codes and a corresponding data payload;
extracting the corresponding data payload, wherein the corresponding data payload comprises the executable device driver;
translating the sequence of operation codes into a set of executable instructions comprising the installation instructions; and
executing the set of executable instructions to install the executable device driver utilizing a runtime engine operating on the wireless communication device.

9. The method of claim 6, further comprising:
determining that a size of the previous hardware device driver is greater than the size of the executable device driver;
copying the previous hardware device driver from a persistent storage to a volatile storage;
deleting the previous hardware device driver from the persistent storage; and
storing the executable device driver for the new hardware component in at least a portion of a location in persistent storage previously occupied by the previous device hardware driver.

10. The method of claim 1, wherein the data component is an external device interface for an external device, further comprising the steps of:
the external device detector (204) of the wireless communication device detecting a connection from the external device;
querying the external device; and
receiving profile information in response to the query;
wherein the unique identifier comprises at least a portion of the profile information.

11. A wireless communication device comprising:
a data storage area (240) comprising instructions executable by the wireless communication device;
at least one of a modular software interface (200) for receiving a user initiated software module download, a modular hardware detector (202) configured to detect a new hardware component installed in the wireless communication device, and an external device detector (204) configured to detect connection of an external device, wherein the at least one of the modular software interface (200), the modular hardware detector (202) and the external device detector (204) is adapted to communicate with a runtime engine to initiate request of a new data component corresponding to the user initiated software module download, the detected new hardware component or the detected connection of the external device, and wherein the at least one of the modular software interface (200), the modular hardware detector (202) and the external device detector (204) is further adopted to determine a unique identifier for the new data component and provide the unique identifier to the runtime engine;
a server opcode library (210) housed in the data storage area (240), the server opcode library comprising operation codes corresponding to instructions executable by a remote server (60);
a handset opcode library (220) housed in the data storage area, the handset opcode library comprising operation codes corresponding to the instructions executable by the wireless communication device (20, 30); and
the runtime engine (230) configured to compile and send server opcode sets and
receive and process handset opcode sets, wherein the runtime engine is adopted to use the unique identifier and the server opcode library to compile a server opcode set for requesting the new data component from the remote server (60) via a wireless communication network (50), the server opcode set having a data payload comprising the unique identifier.

## Patentansprüche

1. Ein Verfahren zum dynamischen Installieren einer Datenkomponente (240) auf einer eingesetzten, drahtlosen Kommunikationseinrichtung (20, 30), aufweisend:
eine Runtime-Engine der eingesetzten, drahtlosen Kommunikationseinrichtung, welche eine Kommunikation zum Installieren der Datenkomponente empfängt, wobei die Kommunikation einen einzigartigen Namen für die angeforderte Datenkomponente aufweist, wobei die Runtime-Engine die Kommunikation von zumindest einem/einer von einer Modular-Software-Schnittstelle (200), welche zum Empfangen von einem durch einen Bediener initiierten Software-Modul-Download konfiguriert ist, einem Modular-Hardware-Detektor (202), welcher zum Detektieren einer neuen Hardware-Komponente, welche in der drahtlosen Kommunikationseinrichtung installiert ist, konfiguriert ist, und einem Externes-Gerät-Detektor (204), welcher zum Detektieren einer Verbindung eines externen Gerätes konfiguriert ist;
die Runtime-Engine, die eine Server-Anfrage kompliliert, wobei die Server-Anfrage den einzigartigen Namen und zumindest einen Server-Operationscode, welcher zu zumindest einer Server-Anweisung, welche durch einen Remote-Server ausführbar ist, korrespondiert, aufweist, wobei der zumindest eine Server-Operationscode in einer Server-Befehlscode-Bibliothek der eingesetzten, drahtlosen Kommunikationseinrichtung untergebracht ist;
Senden der Server-Anfrage an den Remote-Server (60) über ein drahtloses Kommunikationsnetzwerk (50); und
Empfangen einer Antwort vom Remote-Server (60) über das drahtlose Kommunikationsnetzwerk (50), wobei die Antwort die Datenkomponente (240) aufweist.

2. Das Verfahren nach Anspruch 1, wobei die Datenkomponente ein Software-Modul ist.

3. Das Verfahren nach Anspruch 2, ferner die Schritte aufweisend:
Identifizieren eines existierenden Software-Moduls, welches zu löschen ist; und
Löschen des identifizierten, existierenden Software-Moduls, welches von der eingesetzten, drahtlosen Kommunikationseinrichtung zu löschen ist, um einen Speicherplatz für das Software-Modul freizugeben.

4. Das Verfahren nach Anspruch 2, wobei der Schritt des Empfangens einer Antwort vom Remote-Server ferner aufweist:
Empfangen eines Handapparat-Anweisung-Sets mit einem korrespondierenden Daten-Payload;
Extrahieren des Daten-Payloads, wobei der Daten-Payload das Software-Modul aufweist;
Erhalten eines Sets von ausführbaren Anweisungen korrespondierend zum Handapparat-Anweisung-Set; und
Ausführen des Sets von ausführbaren Anweisungen zum Installieren des Software-Moduls.

5. Das Verfahren nach Anspruch 4, wobei der Schritt des Ausführens des Sets von ausführbaren Anweisungen zum Installieren des Software-Moduls innerhalb einer Runtime-Engine ausgeführt wird, welche auf der drahtlosen Kommunikationseinrichtung operiert.

6. Das Verfahren nach Anspruch 1, wobei die Datenkomponente ein ausführbarer Gerätetreiber für die neue Hardware-Komponente und Installationsanweisungen ist, ferner aufweisend die Schritte:
der Modular-Hardware-Detektor (202) der drahtlosen Kommunikationseinrichtung detektiert eine Anwesenheit der neuen Hardware-Komponente in der drahtlosen Kommunikationseinrichtung, wobei die neue Hardware-Komponente eine vorherige Hardware-Komponente, welche einen vorherigen Gerät-Hardware-Treiber aufweist, ersetzt; und
Abfragen der neuen Hardware-Komponente, um eine Profilinformation für die neue Hardware-Komponente zu erhalten;
wobei der einzigartige Name zumindest einen Teil der Profilinformation aufweist.

7. Das Verfahren nach Anspruch 6, ferner die Schritte aufweisend:
Installieren des ausführbaren Gerätetreibers; und
Konfigurieren der neuen Hardware-Komponente.

8. Das Verfahren nach Anspruch 6, wobei das Empfangen der Datenkomponente ferner die Schritte aufweist:
Empfangen eines Handapparat-Anweisung-Sets mit einer Abfolge von Operationscodes und einem korrespondierenden Daten-Payload;
Extrahieren des korrespondierenden Daten-Payloads, wobei der korrespondierende Daten-Payload den ausführbaren Gerätetreiber aufweist;
Übersetzen der Abfolge von Operationscodes in ein Set von ausführbaren Anweisungen, welche die Installationsanweisungen aufweisen; und
Ausführen des Sets von ausführbaren Anweisungen zum Installieren des ausführbaren Gerätetreibers, welcher eine Runtime-Engine verwendet, welche auf der drahtlosen Kommunikationseinrichtung operiert.

9. Das Verfahren nach Anspruch 6, ferner aufweisend:
Bestimmen, dass eine Größe des vorherigen Hardware-Gerätetreibers größer ist als die Größe des ausführbaren Gerätetreibers;
Kopieren des vorherigen Hardware-Gerätetreibers von einem permanenten Speicher in einen flüchtigen Speicher;
Löschen des vorherigen Hardware-Gerätetreibers vom permanenten Speicher; und
Speichern des ausführbaren Gerätetreibers für die neue Hardware-Komponente in zumindest einem Teil einer Stelle in einem permanenten Speicher, welcher vorher von dem vorherigen Hardware-Gerätetreiber besetzt gewesen ist.

10. Das Verfahren nach Anspruch 1, wobei die Datenkomponente eine Externes-Geräte-Schnittstelle für ein externes Gerät ist, ferner die Schritte aufweisend:
der Externes-Gerät-Detektor (204) der drahtlosen Kommunikationseinrichtung detektiert eine Verbindung von dem externen Gerät;
Abfragen des externen Gerätes; und
Empfangen von Profilinformation in Antwort auf die Abfrage,
wobei der einzigartige Name zumindest einen Teil der Profilinformation aufweist.

11. Eine drahtlose Kommunikationseinrichtung, aufweisend:
einen Datenspeicherbereich (240), aufweisend Anweisungen, welche mittels der drahtlosen Kommunikationseinrichtung ausführbar sind;
zumindest eine/einen von einer Modular-Software-Schnittstelle (200) zum Empfangen von einem durch einen Bediener initiierten Software-Modul-Download, einem Modular-Hardware-Detektor (202), der zum Detektieren einer neuen Hardware-Komponente, die in der drahtlosen Kommunikationseinrichtung installiert ist, konfiguriert ist, und einem Externes-Gerät-Detektor (204), der zum Detektieren einer Verbindung eines externen Gerätes konfiguriert ist,
wobei die/der zumindest eine von der Modular-Software-Schnittstelle (200), dem Modular-Hardware-Detektor (202) und dem Externes-Gerät-Detektor (204) eingerichtet ist zum Kommunizieren mit einer Runtime-Engine, um eine Anforderung einer neuen Datenkomponente zu initiieren, die zum durch den Bediener initiierten Software-Modul-Download, der detektierten neuen Hardware-Komponente oder der detektierten Verbindung des externen Gerätes korrespondiert, und wobei die/der zumindest eine von der Modular-Software-Schnittstelle (200), dem Modular-Hardware-Detektor (202) und dem Externes-Gerät-Detektor (204) ferner eingerichtet ist zum Bestimmen eines einzigartigen Namens für die neue Datenkomponente und zum Bereitstellen des einzigartigen Namens an die Runtime-Engine;
eine Server-Befehlscode-Bibliothek (210), die in dem Datenspeicherbereich (240) untergebracht ist, wobei die Server-Befehlscode-Bibliothek Operationscodes aufweist, die zu Anweisungen korrespondieren, die mittels eines Remote-Servers (60) ausführbar sind;
Handapparat-Befehlscode-Bibliothek (220), die in dem Datenspeicherbereich untergebracht ist, wobei die Handapparat-Befehlscode-Bibliothek Operationscodes aufweist, die zu den Anweisungen korrespondieren, die mittels der drahtlosen Kommunikationseinrichtung (20, 30) ausführbar sind; und
die Runtime-Engine (230), die konfiguriert ist zum Kompilieren und Senden von Server-Befehlscode-Sets, zum Empfangen und zum Verarbeiten der Handapparat-Befehlscode-Sets, wobei die Runtime-Engine eingerichtet ist, den einzigartige Namen und die Server-Befehlscode-Bibliothek zu verwenden, um ein Server-Befehlscode-Set zum Anfordern der neuen Datenkomponente vom Remote-Server (60) mittels eines drahtlosen Kommunikationsnetzwerks (50) zu kompilieren, wobei das Server-Befehlscode-Set einen Daten-Payload hat, der den einzigartigen Namen aufweist.

## Revendications

1. Procédé pour installer dynamiquement un composant de données (240) sur un dispositif de communication sans fil déployé (20, 30) ; comprenant :
un moteur d'exécution du dispositif de communication sans fil déployé recevant une communication pour installer le composant de données, la communication comprenant un identificateur unique pour le composant de données demandé, dans lequel le moteur d'exécution reçoit la communication d'au moins un parmi une interface de logiciel modulaire (200) configurée pour recevoir un téléchargement de module logiciel initié par l'utilisateur, un détecteur de matériel modulaire (202) configuré pour détecter un nouveau composant matériel installé dans le dispositif de communication sans fil, et un détecteur de dispositif externe (204) configuré pour détecter la connexion d'un dispositif externe ;
le moteur d'exécution compilant une interrogation de serveur, l'interrogation de serveur comprenant l'identificateur unique et au moins un code d'opération de serveur correspondant à au moins une instruction de serveur exécutable par un serveur distant, le au moins un code d'opération de serveur hébergé dans une bibliothèque de codes d'opérations de serveur du dispositif de communication sans fil déployé ;
l'envoi de l'interrogation de serveur au serveur distant (60) via un réseau de communication sans fil (50) ; et
la réception d'une réponse en provenance du serveur distant (60) via le réseau de communication sans fil (50), dans lequel la réponse comprend le composant de données (240).

2. Procédé selon la revendication 1, dans lequel le composant de données est un module logiciel.

3. Procédé selon la revendication 2, comprenant en outre les étapes consistant à :
identifier un module logiciel existant à supprimer ; et
supprimer le module logiciel existant identifié à supprimer du dispositif de communication sans fil déployé pour libérer de l'espace de stockage pour le module logiciel.

4. Procédé selon la revendication 2, dans lequel l'étape de réception d'une réponse en provenance du serveur distant comprend en outre :
la réception d'un jeu d'instructions de combiné ayant une charge utile de données correspondante ;
l'extraction de la charge utile de données, dans laquelle la charge utile de données comprend le module logiciel ;
l'obtention d'un jeu d'instructions exécutables correspondant au jeu d'instructions de combiné ; et
l'exécution du jeu d'instructions exécutables pour installer le module logiciel.

5. Procédé selon la revendication 4, dans lequel l'étape d'exécution du jeu d'instructions exécutables est effectuée à l'intérieur d'un moteur d'exécution fonctionnant sur le dispositif de communication sans fil.

6. Procédé selon la revendication 1, dans lequel le composant de données est un pilote de dispositif exécutable pour le nouveau composant matériel et des instructions d'installation, comprenant en outre les étapes de :
le détecteur de matériel modulaire (202) du dispositif de communication sans fil détectant une présence du nouveau composant matériel dans le dispositif de communication sans fil, le nouveau composant matériel remplaçant un composant matériel précédent ayant un pilote matériel de dispositif précédent ; et
interrogeant le nouveau composant matériel pour obtenir des informations de profil pour le nouveau composant matériel ;
dans lequel l'identificateur unique comprend au moins une partie des informations de profil.

7. Procédé selon la revendication 6, comprenant en outre les étapes consistant à :
installer le pilote de dispositif exécutable ; et
configurer le nouveau composant matériel.

8. Procédé selon la revendication 6, dans lequel la réception du composant de données comprend en outre les étapes consistant à :
recevoir un jeu d'instructions de combiné ayant une séquence de codes d'opérations et une charge utile de données correspondante ;
extraire la charge utile de données correspondante, **caractérisé en ce que** la charge utile de données correspondante comprend le pilote de dispositif exécutable ;
traduire la séquence de codes d'opérations en un jeu d'instructions exécutables comprenant les instructions d'installation ; et
exécuter le jeu d'instructions exécutables pour installer le pilote de dispositif exécutable en utilisant un moteur d'exécution fonctionnant sur le dispositif de communication sans fil.

9. Procédé selon la revendication 6, comprenant en outre :
la détermination qu'une taille du pilote de dispositif matériel précédent est supérieure à la taille du pilote de dispositif exécutable ;
la copie du pilote de dispositif matériel précédent d'un stockage persistant à un stockage volatil ;
la suppression du pilote de dispositif matériel précédent du stockage persistant ; et
le stockage du pilote de dispositif exécutable pour le nouveau composant matériel dans au moins une partie d'un emplacement dans le stockage persistant occupé précédemment par le pilote matériel de dispositif précédent.

10. Procédé selon la revendication 1, dans lequel le composant de données est une interface de dispositif externe pour un dispositif externe, comprenant en outre les étapes de :
le détecteur de dispositif externe (204) du dispositif de communication sans fil détectant une connexion du dispositif externe ;
interrogeant le dispositif externe ; et
recevant des informations de profil en réponse à l'interrogation ;
dans lequel l'identificateur unique comprend au moins une partie des informations de profil.

11. Dispositif de communication sans fil comprenant :
une zone de stockage de données (240) comprenant des instructions exécutables par le dispositif de communication sans fil ;
au moins un parmi une interface de logiciel modulaire (200) pour recevoir un téléchargement de module logiciel initié par l'utilisateur, un détecteur de matériel modulaire (202) configuré pour détecter un nouveau composant matériel installé dans le dispositif de communication sans fil, et un détecteur de dispositif externe (204) configuré pour détecter la connexion d'un dispositif externe, dans lequel le au moins un parmi l'interface de logiciel modulaire (200), le détecteur de matériel modulaire (202) et le détecteur de dispositif externe (204) est adapté pour communiquer avec un moteur d'exécution pour initier la demande d'un nouveau composant de données correspondant au téléchargement de module logiciel initié par l'utilisateur, au nouveau composant matériel détecté ou à la connexion détectée du dispositif externe, et dans lequel le au moins un parmi l'interface de logiciel modulaire (200), le détecteur de matériel modulaire (202) et le détecteur de dispositif externe (204) est en outre adapté pour déterminer un identificateur unique pour le nouveau composant de données et fournir l'identificateur unique au moteur d'exécution ;
une bibliothèque de codes d'opérations de serveur (210) hébergée dans la zone de stockage de données (240), la bibliothèque de codes d'opérations de serveur comprenant des codes d'opérations correspondant à des instructions exécutables par un serveur distant (60) ;
une bibliothèque de codes d'opérations de combiné (220) hébergée dans la zone de stockage de données, la bibliothèque de codes d'opérations de combiné comprenant des codes d'opérations correspondant aux instructions exécutables par le dispositif de communication sans fil (20, 30) ; et
le moteur d'exécution (230) configuré pour compiler et envoyer des jeux de codes d'opérations de serveur et recevoir et traiter des jeux de codes d'opérations de combiné, dans lequel le moteur d'exécution est adapté pour utiliser l'identificateur unique et la bibliothèque de codes d'opérations de serveur pour compiler un jeu de codes d'opérations de serveur pour demander le nouveau composant de données au serveur distant (60) via un réseau de communication sans fil (50), le jeu de codes d'opérations de serveur ayant une charge utile de données comprenant l'identificateur unique.
